# DEMANDE DE BREVET EUROPEEN

(11) **EP 3 401 551 A1**
(43) Date de publication de la demande: **14.11.2018**
(21) Numéro de dépôt: 18171090.6
(22) Date de dépôt: 07.05.2018
(51) Int. Cl.: F04D 29/42, F04D 17/16, F04D 25/06, F04D 25/08, F04D 27/00, F04D 29/28, F04D 29/30, F04D 29/70, F24F 7/02

(54) **DISPOSITIF D'EXTRACTION D'AIR À BASSE PRESSION**

(30) Priorité: 11.05.2017 FR 1754115
(71) Demandeur: VTI, 34110 Frontignan (FR)
(72) Inventeur: SANCHEZ, Marc, 34110 Frontignan (FR); BOUIS, Florian, 34140 Meze (FR)
(74) Mandataire: IPAZ

(57) **Abrégé**

L'invention concerne un dispositif (100) de ventilation prévu pour l'extraction d'air à une pression totale inférieure à 150 Pa, comprenant au moins un ventilateur (118) centrifuge agencé dans une structure (102), ladite structure (102) comprenant pour au moins un ventilateur (118) :
- une ouverture d'entrée d'air vers le ventilateur (118), agencée axiale par rapport audit ventilateur (118),
- une ouverture de sortie d'air (108), depuis le ventilateur (118), agencée radiale par rapport audit ventilateur (118),
caractérisé en ce que l'ouverture de sortie (108) radiale est située en regard dudit ventilateur (118) et s'étend autour dudit ventilateur (118), sur au moins 50% du périmètre dudit ventilateur (118).

L'invention concerne aussi une installation d'extraction d'air à une pression totale inférieure à 150 Pa dans un immeuble.

## Description

L'invention concerne un dispositif d'extraction d'air à basse pression.

Le domaine de l'invention est le domaine d'extraction d'air à basse pression, et plus particulièrement le domaine des dispositifs d'extraction d'air à une pression totale inférieure à 150 Pa.

### ETAT DE LA TECHNIQUE

Les dispositifs de ventilation, prévus pour le désenfumage, l'aération, etc. doivent présenter un rendement d'extraction élevé et un niveau sonore réduit, en particulier dans les immeubles à usage professionnel, commercial ou encore d'habitation.

Les dispositifs de ventilation actuels ne sont pas conçus pour l'extraction d'air à basse pression. En effet, ces dispositifs comprennent des ventilateurs agencés dans des volutes qui réduisent considérablement le rendement de ces dispositifs à des pressions totales inférieures à 150 Pa. Par ailleurs, la consommation énergétique de ces dispositifs reste importante. De plus, ces dispositifs restent bruyants.

Un but de la présente invention est de remédier à ces inconvénients.

Un autre but de la présente invention est de proposer un dispositif de ventilation moins bruyant.

Un autre but de la présente invention est de proposer un dispositif de ventilation avec une consommation énergétique réduite comparé aux dispositifs de l'état de la technique.

Un autre but de la présente invention est de proposer un dispositif de ventilation avec un meilleur rendement d'extraction comparé aux dispositifs de l'état de la technique.

### EXPOSÉ DE L'INVENTION

Au moins un des objectifs précités est atteint par un dispositif de ventilation prévu pour l'extraction d'air à une pression totale inférieure à 150 Pa, en particulier inférieure à 80 Pa, comprenant au moins un ventilateur centrifuge agencé dans une structure, ladite structure comprenant pour au moins un ventilateur :
- une ouverture d'entrée d'air vers le ventilateur, agencée axiale par rapport audit ventilateur,
- une ouverture de sortie d'air, depuis le ventilateur, agencée radiale par rapport audit ventilateur,
caractérisé en ce que l'ouverture de sortie radiale est située en regard dudit ventilateur et s'étend autour dudit ventilateur, sur au moins 50% du périmètre dudit ventilateur.

Avec le système selon l'invention, l'ouverture de sortie, s'étendant sur au moins 50% du périmètre du ventilateur, permet de ne pas convertir la pression statique en pression dynamique, contrairement aux dispositifs de l'état de la technique. Le dispositif selon l'invention réduit donc les pertes de pression totale en sortie du ventilateur lors de l'extraction à basse pression. Le dispositif selon l'invention présente donc un meilleur rendement d'extraction d'air à des pressions totales inférieures à 150 Pa. De plus, le dispositif selon l'invention consomme moins d'énergie et permet d'utiliser le ventilateur à des vitesses réduites, ce qui réduit le bruit du dispositif selon l'invention.

L'ouverture de sortie peut s'étendre autour du ventilateur sur au moins 80% du périmètre dudit ventilateur.

Dans une version de réalisation du dispositif selon l'invention, pour au moins un ventilateur, l'ouverture de sortie radiale peut s'étendre autour dudit ventilateur sur sensiblement la totalité du périmètre dudit ventilateur.

Ainsi l'air extrait du ventilateur peut être dispersé en sortie du ventilateur sans rencontrer d'obstacles. Le dispositif selon l'invention dans ce cas présente un meilleur rendement, et un bruit de fonctionnement plus réduit.

Dans un mode de réalisation du dispositif selon l'invention, pour au moins un ventilateur, l'ouverture de sortie radiale peut être continue autour du périmètre dudit ventilateur.

Dans un mode de réalisation alternatif du dispositif selon l'invention, pour au moins un ventilateur, l'ouverture de sortie radiale peut être discrète et formée par plusieurs ouvertures distribuées autour du périmètre dudit ventilateur.

La surface totale desdites ouvertures peut s'étendre autour du ventilateur, sur au moins 50% du périmètre dudit ventilateur.

La surface totale desdites ouvertures peut s'étendre autour du ventilateur, sur au moins 80% du périmètre dudit ventilateur.

Les ouvertures peuvent être séparées par la structure à une distance correspondant à au moins la moitié de la longueur d'une des ouvertures.

Dans un mode de réalisation du dispositif selon l'invention, pour au moins un ventilateur, l'ouverture de sortie peut être formée entre deux flasques dudit ventilateur disposés de part et d'autre des aubes dudit ventilateur.

Avantageusement, au moins un ventilateur peut être agencé de façon amovible dans la structure du dispositif selon l'invention.

Avantageusement, le dispositif selon l'invention peut comprendre au moins un moteur relié à au moins ventilateur prévu pour entrainer la rotation dudit ventilateur.

Au moins un moteur peut être un moteur de type « brushless ».

Au moins un moteur peut être relié à au moins un ventilateur par un arbre de transmission.

En particulier, le dispositif selon l'invention peut comprendre, pour chaque ventilateur, un moteur prévu pour entrainer sa rotation.

Alternativement, le dispositif selon l'invention peut comprendre un moteur pour tous les ventilateurs dudit dispositif.

La structure du dispositif selon l'invention peut être démontable pour permettre l'accès à au moins un ventilateur et/ou au moins un moteur.

En particulier, au moins un ventilateur peut être agencé entre au moins un moteur et au moins une ouverture d'entrée d'air.

Dans une version préférée de réalisation, le dispositif selon l'invention peut comprendre, pour au moins un ventilateur :
- au moins un capteur de pression,
- au moins un capteur de débit, et/ou
- au moins un capteur de température ;
prévu(s) pour mesurer la pression, le débit et/ou la température au niveau de l'ouverture d'entrée d'air.

En particulier, pour au moins un ventilateur, au moins un capteur peut être agencé dans l'ouverture d'entée d'air.

En particulier, le dispositif selon l'invention peut comprendre pour chaque ventilateur un capteur de pression et un capteur de débit et un capteur de température.

Dans une version de réalisation avantageuse, le dispositif selon l'invention peut comprendre un moyen de commande prévu pour contrôler la rotation d'au moins un ventilateur en fonction des données retournées par au moins un capteur de pression et/ou au moins un capteur de débit et/ou au moins un capteur de température.

Alternativement, ou en plus, la vitesse de rotation d'au moins un ventilateur peut être commandée de façon manuelle par un opérateur.

En particulier, le moyen de commande peut contrôler la vitesse de rotation en fonction des données retournées par au moins un capteur en vue de maintenir un débit ou une pression d'extraction à une valeur prédéterminée.

Plus particulièrement, la vitesse de rotation d'au moins un ventilateur peut être comprise entre 300 tr/min et 900 tr/min pour un débit d'extraction inférieur à 2500 m³/h, en particulier inférieur à 2000 m³/h.

Le moyen de commande peut comprendre un moyen de réception et/ou de transmission de données sans fil ou de façon filaire. Le moyen de réception et/ou de transmission de données peut :
- recevoir des données de contrôle, et/ou
- transmettre un état de fonctionnement du dispositif, et/ou une donnée mesurée par au moins un capteur ;
depuis/vers un opérateur à distance.

Le moyen de commande peut comprendre un bouton d'arrêt d'urgence pour arrêter le dispositif selon l'invention en cas d'urgence.

Dans un mode de réalisation particulier, le dispositif selon l'invention peut comprendre deux ventilateurs, en particulier agencés tête bêche, ledit dispositif comprenant :
- un moteur commun audit deux ventilateurs ; ou
- un moteur individuel pour chaque ventilateur.

Avantageusement, le dispositif selon l'invention peut comprendre, pour chaque ventilateur, une ouverture d'entrée d'air et une ouverture de sortie d'air.

En particulier, les ouvertures d'entrée d'air peuvent être agencées sur deux côtés opposés de la structure du dispositif selon l'invention.

Alternativement, les ouvertures d'entrée d'air peuvent être agencées sur deux côtés adjacents de la structure du dispositif selon l'invention.

Préférentiellement, le dispositif selon l'invention peut comprendre un moteur commun relié aux deux ventilateurs, et prévu pour entrainer la rotation desdits ventilateurs.

En particulier, le moteur peut être agencé dans la structure du dispositif et entre les deux ventilateurs.

Le dispositif selon l'invention peut comprendre deux arbres de transmission reliant les deux ventilateurs au moteur.

Alternativement, le dispositif selon l'invention peut comprendre deux moteurs, chaque moteur étant agencé pour entraîner la rotation d'un ventilateur.

Dans un mode de réalisation, l'axe de rotation d'au moins un ventilateur peut former un angle non nul avec la force gravitationnelle, en particulier supérieur à 10° et plus particulièrement égal à 90°, de sorte que l'axe d'au moins un ventilateur n'est pas parallèle avec la force gravitationnelle.

Dans un mode de réalisation particulier, l'axe de l'ouverture d'entrée d'air peut être sensiblement parallèle à une tangente d'une surface sur laquelle est agencé le dispositif selon l'invention.

Dans un mode de réalisation particulier, l'axe du ventilateur peut être sensiblement parallèle à une tangente d'une surface sur laquelle est agencé le dispositif selon l'invention.

Dans un mode préféré de réalisation, le dispositif selon l'invention peut comprendre au moins un moyen de support agencé pour soutenir la structure du dispositif selon une direction formant un angle non nul avec l'axe de rotation d'au moins un ventilateur, en particulier supérieur à 10°.

En particulier, ladite direction peut être perpendiculaire à l'axe de rotation dudit au moins un ventilateur.

Ledit au moins un moyen de support peut être tout type de support tel qu'une plateforme de support, un pied de support, un support en x, etc.

Dans un mode préféré de réalisation, le dispositif selon l'invention peut comprendre au moins deux pieds amovibles reliés à la structure dudit dispositif.

Lesdits au moins deux pieds peuvent être agencés pour soutenir la structure du dispositif.

Les au moins deux pieds peuvent être tout type de pieds de support tels que des pieds cylindriques, des plaques de support, etc.

Dans un mode de réalisation, les au moins deux pieds peuvent être agencés perpendiculaires à l'axe de rotation d'au moins un ventilateur.

Dans un mode de réalisation, les au moins deux pieds peuvent être identiques.

Alternativement, les au moins deux pieds peuvent avoir des hauteurs différentes.

Avantageusement, le dispositif selon l'invention peut comprendre, pour au moins un ventilateur, un moyen de filtrage d'air agencé dans/sur l'ouverture de sortie d'air.

Le moyen de filtrage d'air peut être déformable, en particulier réalisé en fibres synthétiques.

Dans une version avantageuse de réalisation, le dispositif selon l'invention peut comprendre, pour au moins un ventilateur, un piquage relié à l'ouverture d'entrée d'air et prévu pour le passage d'air.

Le piquage peut être raccordé à un réseau d'aération d'un immeuble par exemple.

Au moins un capteur de pression et/ou au moins un capteur de température et/ou au moins un capteur de débit peut être agencé dans ledit piquage.

Pour au moins un ventilateur, le piquage peut être relié à l'ouverture d'entrée d'air de façon amovible, par exemple par serrage, vissage ou par tout autre moyen de fixation amovible.

Alternativement, le piquage peut être relié à l'ouverture d'entrée d'air de façon permanente par exemple par soudage.

La structure du dispositif selon l'invention peut être réalisée en acier galvanisé, en aluminium, en métal, ou en plastique.

De plus, la structure du dispositif selon l'invention peut comprendre plusieurs pièces assemblées par vissage, soudage, ou tout autre moyen de fixation.

Le dispositif selon l'invention peut comprendre au moins une poignée amovible agencée sur la structure dudit dispositif et prévue pour déplacer ou manipuler ledit dispositif.

Dans une version préférée de réalisation du dispositif selon l'invention, au moins un ventilateur peut comprendre :
- un flasque, dit inférieur, de forme circulaire et un flasque, dit supérieur, ledit flasque supérieur comprenant en particulier une ouverture, dite une ouïe d'aspiration, prévue pour le passage d'air suivant une direction sensiblement perpendiculaire audit flasque supérieur, et
- au moins une aube agencée entre lesdits flasques et comprenant un bord, dit d'entrée, situé vers le centre dudit ventilateur, et un bord, dit de sortie, situé en périphérie dudit ventilateur ;

Pour au moins une aube :
- un rayon, dit d'entrée, défini entre le centre dudit ventilateur et le bord d'entrée de ladite aube, peut être compris entre 90 mm et 130 mm, et
- un rayon, dit de sortie, défini entre le centre dudit ventilateur et le bord de sortie de ladite aube, peut être compris entre 150 mm et 250 mm.

Le dispositif selon l'invention dans ce cas présente un meilleur rendement, et un bruit de fonctionnement plus réduit.

Le flasque inférieur et l'au moins une aube peuvent former une seule pièce.

En particulier, le flasque inférieur peut comprendre un logement pour la fixation du moteur au ventilateur.

Avantageusement, l'ouverture d'entrée d'air peut avoir une surface égale ou inférieure à la surface de l'ouïe d'aspiration du ventilateur.

En particulier, pour au moins une aube d'au moins un ventilateur, un angle, dit angle de calage en entrée, formé par :
- le rayon d'entrée, et
- la tangente à ladite aube au niveau du bord d'entrée,
peut être compris entre 60° et 75°.

En particulier, pour au moins une aube d'au moins un ventilateur, un angle, dit angle de calage en sortie, formé par :
- le rayon de sortie, et
- la tangente à ladite aube au niveau du bord de sortie,
peut être compris entre 60° et 85°.

Plus particulièrement l'angle de calage en sortie peut être compris entre 62° et 85°.

Selon un autre aspect de l'invention, il est proposé une installation prévue pour l'extraction d'air à une pression totale inférieure à 150 Pa dans un immeuble, ladite installation comprenant :
- au moins un dispositif selon l'invention, et
- pour au moins un dispositif, au moins un conduit reliant ledit dispositif à un réseau d'aération dudit immeuble.

Suivant un mode de réalisation de l'installation selon l'invention, au moins un dispositif peut être agencé sur le toit de l'immeuble.

### DESCRIPTION DES FIGURES ET MODES DE RÉALISATION

D'autres avantages et caractéristiques apparaîtront à l'examen de la description détaillée d'exemples de réalisation nullement limitatifs, et des dessins annexés sur lesquels :
- les FIGURES 1a et 1b sont des représentations schématiques d'un premier exemple non limitatif du dispositif selon l'invention ; et
- la FIGURE 2 est une vue éclatée du premier exemple du dispositif selon l'invention ;
- les FIGURES 3a et 3b sont des représentations schématiques d'un exemple non limitatif d'un ventilateur du dispositif selon l'invention ; et
- les FIGURES 4a et 4b sont des représentations schématiques d'un deuxième exemple non limitatif du dispositif selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

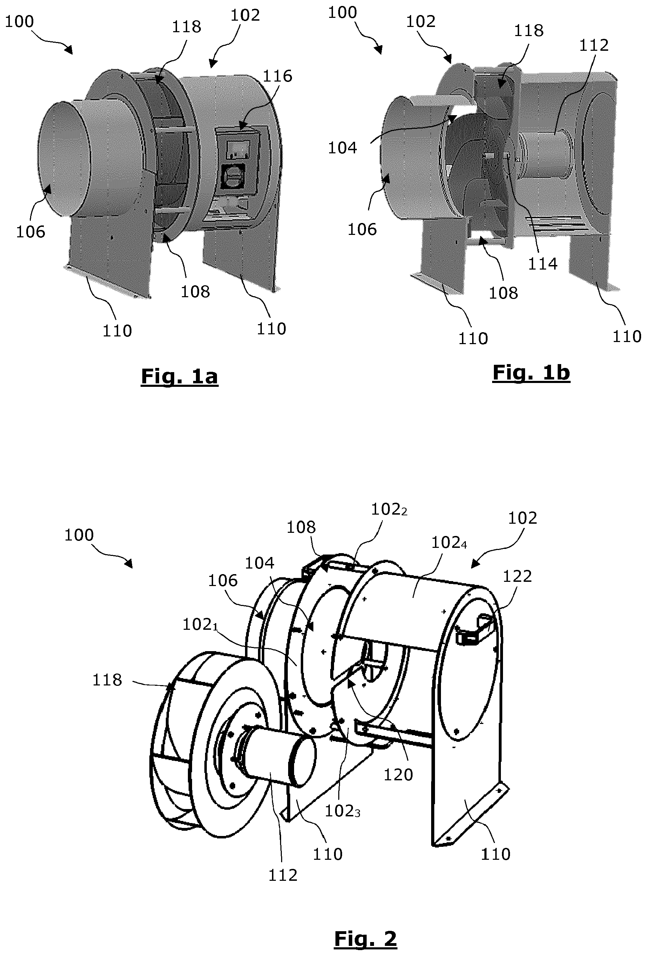

Les FIGURES 1a et 1b sont des représentations schématiques d'un premier exemple non limitatif du dispositif selon l'invention.

La FIGURE 1a est une vue en perspective d'un dispositif 100 selon l'invention, tandis que la FIGURE 1b est une vue en coupe du dispositif 100 de la FIGURE 1a.

Le dispositif 100 comprend un ventilateur centrifuge 118 agencé dans une structure 102. La structure 102 comprend une ouverture d'entrée d'air 104 prévue pour le passage d'air en vue de son extraction par le ventilateur 118. Le dispositif 100 comprend un piquage 106 prévu pour raccorder l'ouverture d'entrée d'air 104 à un conduit d'aération, par exemple d'une installation de ventilation comprenant le dispositif 100.

La structure 102 comprend aussi une ouverture de sortie d'air 108 située en regard du ventilateur 118 et s'étend radialement autour du ventilateur 118. L'ouverture de sortie d'air 108 recouvre 95% du périmètre du ventilateur 118.

Le dispositif 100 comprend deux pieds 110 amovibles agencés pour soutenir la structure 102.

Le dispositif 100 comprend en outre un moteur 112, agencé dans la structure 102, et relié au ventilateur 118 par un arbre de transmission 114. Le moteur 112 est prévu pour entrainer la rotation du ventilateur 118, en particulier à une vitesse comprise entre 300 tr/min et 900 tr/min.

Le dispositif 100 comprend un moyen de commande 116 prévu pour contrôler la vitesse de rotation du ventilateur 118 par exemple en fonction d'une pression, une température d'air. Le moyen de commande 116 comprend un bouton arrêt d'urgence du dispositif 100 prévu pour arrêter le ventilateur 118 en cas de disfonctionnement ou d'urgence.

Le dispositif 100 peut comprendre au moins un capteur de pression et au moins un capteur de température, non représentés sur les FIGURES la et 1b, et agencés dans le piquage 106.

Par exemple, le dispositif 100 peut être agencé sur la toiture d'un immeuble et relié au réseau aéraulique dudit immeuble.

La FIGURE 2 est une vue éclatée du premier exemple du dispositif selon l'invention.

Le moyen de commande 116 n'est pas représenté sur la FIGURE 2 pour faciliter la visualisation du ventilateur 118, du moteur 112 et de la structure 102 du dispositif 100.

La structure 102 comprend quatre pièces 102₁-102₄ assemblées par vissage. Les pièces 102₁, 102₂ et 102₃ sont prévues pour maintenir le ventilateur 118 dans la structure 102. La pièce 102₁ comprend l'ouverture d'entrée d'air 104. Les pièces 102₁ et 102₃ sont reliées entre elles par plusieurs pièces 102₂ agencées radialement autour des pièces 102₁ et 102₃. Les pièces 102₂ sont des bras d'assemblage ayant une longueur correspondant à l'épaisseur du ventilateur 118. L'espace entre deux pièces 102₂ consécutives forme l'ouverture de sortie d'air 108.

La pièce 102₃ comprend une ouverture 120 permettant l'assemblage de la structure 102 et l'ensemble ventilateur 118 et moteur 112. Le démontage des pièces 102₂ permet le montage, ou le démontage du ventilateur 118 et du moteur 112 à travers l'ouverture 120 et facilite ainsi la maintenance et l'entretien du dispositif 100.

La pièce 102₄ est cylindrique et peut comprendre le moteur 112 et le moyen de commande 116 non représenté sur la FIGURE 2.

Le dispositif 100 comprend en outre deux poignées 122 amovibles agencées sur la structure 102. Ces poignées permettent la manipulation du dispositif 100 en vue de son déplacement par exemple.

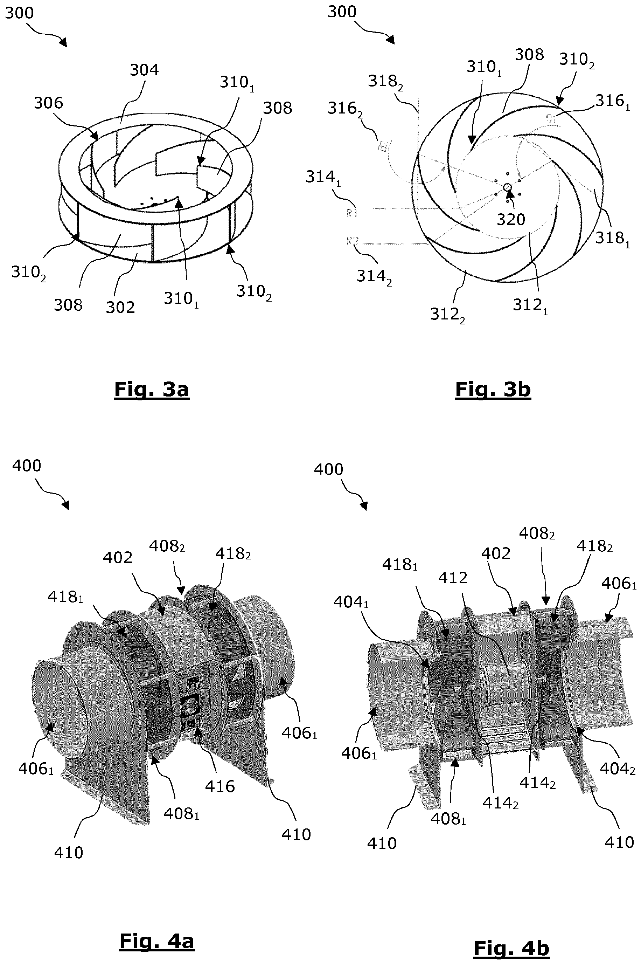

Les FIGURES 3a et 3b sont des représentations schématiques d'un exemple non limitatif d'un ventilateur du dispositif selon l'invention.

La FIGURE 3a est une vue en perspective d'un ventilateur 300 et la FIGURE 3b est une vue d'en haut du ventilateur 300 de la FIGURE 3a.

Le ventilateur 300 des FIGURES 3a et 3b peut être le ventilateur 118 des FIGURES 1a, 1b et 2.

Le ventilateur 300 comprend un flasque 302, dit inférieur, et un flasque 304, dit supérieur. Le flasque supérieur 304 comprend une ouverture circulaire, dite ouïe d'aspiration 306, prévue pour le passage de l'air.

Le ventilateur 300 comprend aussi 7 aubes 308 courbées dans une direction opposée à la rotation du ventilateur 300. Chaque aube 308 est définie par un bord d'entrée 310₁, situé vers le centre du ventilateur 300 et un bord de sortie 310₂ situé en périphérie du ventilateur 300. De plus, les aubes 308 du ventilateur 300 sont identiques.

Sur la FIGURE 3b, le flasque supérieur 304 a été omis pour plus de clarté et laisser un accès visuel aux aubes 308.

Le ventilateur 300 comprend un rayon 312₁, dit d'entrée, correspondant au rayon du cercle 314₁ passant par les bords d'entrée 310₁ de toutes les aubes 308. Le rayon d'entrée 312₁ est compris entre 90 mm et 130 mm, en particulier égal à 113 mm.

Le ventilateur 100 comprend un rayon 312₂, dit de sortie, correspondant au rayon du cercle 314₂ passant par les bords de sortie 310₂ de toutes les aubes 308. Le rayon de sortie 312₂ est compris entre 150 mm et 250 mm, en particulier égal à 209 mm.

Le ventilateur 300 comprend, pour chaque aube 308, un angle 316₁, dit angle de calage en entrée, formé par d'une part le rayon d'entrée 312₁ et d'autre part la tangente 318₁ à ladite aube 308 au niveau de son bord d'entrée 310₁. Pour chaque aube 308, l'angle de calage en entrée 316₁ est compris entre 60° et 75°, en particulier égal à 70°.

Le ventilateur 300 comprend, pour chaque aube 308, un angle 316₂, dit angle de calage en sortie, formé par d'une part le rayon de sortie 312₂ et d'autre part la tangente 318₂ à ladite aube 308 au niveau de son bord de sortie 310₂. Pour chaque aube 108, l'angle de calage en sortie 316₂ est compris entre 60° et 85°, en particulier égal à 70°.

De plus, le ventilateur 300 comprend un moyen de fixation 320 prévu pour relier ledit ventilateur 300 à un moteur non représenté sur les FIGURE 3a et 3b. Le moyen de fixation 320 peut comprendre une ouverture pour la fixation d'un arbre de transmission et des trous de passage de vis prévus pour la fixation dudit arbre de transmission, par exemple l'arbre de transmission 114 des FIGURES la et 1b, au ventilateur 300.

Les FIGURES 4a et 4b sont des représentations schématiques d'un deuxième exemple non limitatif du dispositif selon l'invention.

La FIGURE 4a est une vue en perspective d'un dispositif 400 selon l'invention, tandis que la FIGURE 4b est une vue en coupe du dispositif 400 de la FIGURE 4a.

Le dispositif 400 comprend deux ventilateurs centrifuges 418₁-418₂ agencés tête bêche dans une structure 402.

La structure 402 comprend, pour chaque ventilateur 418₁-418₂, une ouverture d'entrée d'air 404₁, respectivement 404₂, prévue pour le passage d'air en vue de son extraction par le ventilateur 418₁, respectivement 418₂. Les ouvertures d'entrée d'air 404 sont agencées selon deux côtés opposés de la structure 402.

Alternativement, les ouvertures d'entrée d'air 404 sont agencées selon deux côtés adjacents de la structure 402.

Le dispositif 400 comprend, pour chaque ventilateur 418₁-418₂, un piquage 406₁, respectivement 406₂, prévu pour raccorder l'ouverture d'entrée d'air 404₁, respectivement 404₂, à un conduit d'aération, par exemple d'une installation de ventilation comprenant le dispositif 400.

La structure 402 comprend aussi, pour chaque ventilateur 418₁-418₂, une ouverture de sortie d'air 406₁, respectivement 406₂, située en regard du ventilateur 418₁, respectivement 418₂, et s'étend radialement autour du ventilateur 418₁, respectivement 418₂. Chaque ouverture de sortie d'air 408 recouvre 95% du périmètre du ventilateur 418.

Le dispositif 400 comprend deux pieds 410 amovibles agencés pour soutenir la structure 402.

Le dispositif 400 comprend en outre un moteur 412, agencé dans la structure 402, et relié à chaque ventilateur 418₁-418₂ par un arbre de transmission 414₁, respectivement 414₂. Le moteur 412 est prévu pour entrainer la rotation de chaque ventilateur 418, en particulier à une vitesse comprise entre 300 tr/min et 900 tr/min.

Alternativement, le dispositif 400 peut comprendre deux moteurs agencés dans la structure et reliés chacun à un ventilateur du dispositif 400.

Le dispositif 400 comprend en outre un moyen de commande 416 prévu pour contrôler la vitesse de rotation de chaque ventilateur 418 par exemple en fonction d'une pression, une température d'air. Le moyen de commande 116 comprend un bouton arrêt d'urgence du dispositif 400 prévu pour arrêter un des ventilateurs 418 en cas de disfonctionnement ou d'urgence.

Par exemple, le dispositif 400 peut être agencé sur la toiture d'un immeuble et relié au réseau aéraulique dudit immeuble.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (100;400) de ventilation prévu pour l'extraction d'air à une pression totale inférieure à 150 Pa, comprenant au moins un ventilateur (118;300;418) centrifuge agencé dans une structure (102;402), ladite structure (102;402) comprenant pour au moins un ventilateur (118;300;418) :
- une ouverture d'entrée d'air (104;404) vers le ventilateur (118;300;418), agencée axiale par rapport audit ventilateur (118;300;418),
- une ouverture de sortie d'air (108;408), depuis le ventilateur (118;300;418), agencée radiale par rapport audit ventilateur (118;300;418),
**caractérisé en ce que** l'ouverture de sortie (108;408) radiale est située en regard dudit ventilateur (118;300;418) et s'étend autour dudit ventilateur (118;300;418), sur au moins 50% du périmètre dudit ventilateur (118;300;418) et **en ce que** la vitesse de rotation dudit au moins un ventilateur (118;300;418) est comprise entre 300 tr/min et 900 tr/min.

2. Dispositif (100;400) selon la revendication précédente, **caractérisé en ce que**, pour au moins un ventilateur (118;300;418), l'ouverture de sortie radiale s'étend autour dudit ventilateur (118;300;418) sur sensiblement la totalité du périmètre dudit ventilateur (118;300;418).

3. Dispositif (100;400) selon l'une quelconque des revendications précédentes, **caractérisé en ce que**, pour au moins un ventilateur (118;300;418), l'ouverture de sortie (108;408) radiale est continue autour du périmètre dudit ventilateur (118;300;418).

4. Dispositif (100;400) selon l'une quelconque des revendications 1 ou 2, **caractérisé en ce que**, pour au moins un ventilateur (118;300;418), l'ouverture de sortie (108;408) radiale est discrète et formée par plusieurs ouvertures distribuées autour du périmètre dudit ventilateur (118;300;418).

5. Dispositif (100;400) selon l'une quelconque des revendications précédentes, **caractérisé en ce que**, pour au moins un ventilateur (118;300;418), l'ouverture de sortie (108;408) est formée entre deux flasques dudit ventilateur disposés de part et d'autre des aubes dudit ventilateur.

6. Dispositif (100;400) selon l'une quelconque des revendications précédentes, **caractérisé en ce qu'**il comprend au moins un moteur (112;412) relié à au moins ventilateur (118;300;418) prévu pour entrainer la rotation dudit ventilateur (118;300;418).

7. Dispositif (100;400) l'une quelconque des revendications précédentes, **caractérisé en ce qu'**il comprend, pour au moins un ventilateur (118;300;418) :
- au moins un capteur de pression,
- au moins un capteur de débit, et/ou
- au moins un capteur de température ;
prévu(s) pour mesurer la pression, le débit et/ou la température au niveau de l'ouverture d'entrée d'air (104;404).

8. Dispositif (100;400) selon l'une quelconque des revendications précédentes, **caractérisé en ce qu'**il comprend un moyen de commande (116;416) prévu pour contrôler la rotation d'au moins un ventilateur (118;300;418) en fonction des données retournées par au moins un capteur de pression et/ou au moins un capteur de débit et/ou au moins un capteur de température.

9. Dispositif (400) selon l'une quelconque des revendications précédentes, **caractérisé en ce qu'**il comprend deux ventilateurs (418₁;418₂), en particulier agencés tête bêche, ledit dispositif (400) comprenant :
- un moteur (412) commun audit deux ventilateurs (418₁;418₂) ; ou
- un moteur individuel pour chaque ventilateur.

10. Dispositif (100;400) selon l'une quelconque des revendications précédentes, **caractérisé en ce qu'**il comprend au moins deux pieds (110;410) amovibles reliés à la structure (102;402) dudit dispositif.

11. Dispositif (100;400) selon l'une quelconque des revendications précédentes, **caractérisé en ce qu'**il comprend, pour au moins un ventilateur (118;300;418), un moyen de filtrage d'air agencé dans l'ouverture de sortie d'air (108;408).

12. Dispositif (100;400) selon l'une quelconque des revendications précédentes, **caractérisé en ce qu'**il comprend, pour au moins un ventilateur (118;300;418), un piquage (106;406) relié à l'ouverture d'entrée d'air (104;404) et prévu pour le passage d'air.

13. Dispositif (100;400) selon l'une quelconque des revendications précédentes, **caractérisé en ce qu'**au moins un ventilateur (300) comprend :
- un flasque (302), dit inférieur, de forme circulaire et un flasque (304), dit supérieur, et
- au moins une aube (308) agencée entre lesdits flasques (302;304) et comprenant un bord (310₁), dit d'entrée, situé vers le centre dudit ventilateur (300), et un bord (310₂), dit de sortie, situé en périphérie dudit ventilateur (300) ;
et **en ce que** pour au moins une aube (308) :
- un rayon (314i), dit d'entrée, défini entre le centre dudit ventilateur (300) et le bord d'entrée (310₁) de ladite aube (308), est compris entre 90 mm et 130 mm, et
- un rayon (314₂), dit de sortie, défini entre le centre dudit ventilateur (300) et le bord de sortie (310₂) de ladite aube (308), est compris entre 150 mm et 250 mm.

14. Installation prévue pour l'extraction d'air à une pression totale inférieure à 150 Pa dans un immeuble, ladite installation comprenant :
- au moins un dispositif (100;400) selon l'une quelconque des revendications précédentes, et
- pour au moins un dispositif (100;400), au moins un conduit reliant ledit dispositif à un réseau d'aération dudit immeuble.

15. Installation selon la revendication précédente, **caractérisé en ce qu'**au moins un dispositif (100;400) est agencé sur le toit de l'immeuble.
